# EUROPÄISCHE PATENTSCHRIFT

(11) **EP 1 846 633 B1**
(45) Veröffentlichungstag und Bekanntmachung des Hinweises auf die Patenterteilung: **11.03.2009**
(21) Anmeldenummer: 06702903.3
(22) Anmeldetag: 12.01.2006
(51) Int. Cl.: E04G 25/08, F16B 7/06

(54) **LÄNGENVERSTELLBARES ZWISCHENSTÜCK MIT EINEM UNIDIREKTIONAL WIRKENDEN VERSCHIEBESPERRMECHANISMUS**
LONGITUDINALLY ADJUSTABLE INTERMEDIATE PIECE WITH A UNIDIRECTIONALLY ACTING DISPLACEMENT BLOCKING MECHANISM
PIECE INTERMEDIAIRE REGLABLE EN LONGUEUR, COMPRENANT UN MECANISME DE BLOCAGE DU DEPLACEMENT A EFFET UNIDIRECTIONNEL

(30) Priorität: 10.02.2005 DE 102005006050
(43) Veröffentlichungstag der Anmeldung: 24.10.2007
(73) Patentinhaber: Fabbri, Flaviano, 40065 Pianoro (IT)
(72) Erfinder: Fabbri, Flaviano, 40065 Pianoro (IT)
(74) Vertreter: Bauer, Friedrich
(86) Internationale Anmeldenummer: PCT/EP2006/000238
(87) Internationale Veröffentlichungsnummer: WO 2006/084538

(56) Entgegenhaltungen:
- DE-A1- 2 120 588
- DE-A1- 2 206 351
- US-A- 3 687 488
- US-A- 3 991 964

## Beschreibung

Die Erfindung betrifft ein längenverstellbares Zwischenstück mit einem unidirektional wirkenden Verschiebesperrmechanismus gemäß dem Oberbegriff des Anspruches 1.

Längenverstellbare Zwischenstücke dieser Art werden in den verschiedensten Bereichen der Technik eingesetzt und können überall dort zur Anwendung gelangen, wo der Abstand zwischen zwei Punkten eingestellt bzw. nachgestellt werden muss. Beispielsweise werden derartige Zwischenstücke als Abstandshalter zwischen Elementen eingesetzt, deren gegenseitiger Abstand sich aufgrund von Verschleiß, Dehnung, Verkürzung, Temperaturänderungen etc. verändert, wobei gewünscht wird, dass sich der Abstandshalter der Veränderung des Abstandes anpasst. Ein längenverstellbares Zwischenstück mit einem ersten Längenelement und einem zweiten Längenelement, das mit dem erstem Längenelement längsverschiebbar zusammenwirkt ist in DE 22 06 351 A1.

Es sind unidirektional wirkende Verschiebesperrmechanismen bekannt, die bewirken, dass eine gegenseitige Verschiebung von zwei Elementen nur in einer Richtung möglich ist, während eine Verschiebung in die andere Richtung blockiert wird. Derartige Mechanismen ermöglichen jedoch keine stufenlose Längeneinstellung bzw. -nachstellung.

Der Erfindung liegt die Aufgabe zugrunde, ein längenverstellbares Zwischenstück mit einem unidirektional wirkenden Verschiebesperrmechanismus zu schaffen, das auf möglichst einfache und kostengünstige Weise herstellbar ist und eine stufenlose Längenverstellung ermöglicht.

Diese Aufgabe wird erfindungsgemäß durch die Merkmale der Ansprüche 1 und 2 gelöst. Vorteilhafte Ausführungsformen sind in den weiteren Ansprüchen beschrieben.

Das erfindungsgemäße längenverstellbare Zwischenstück gemäß Anspruch 1 weist ein mit einem Gewinde versehenes erstes Längenelement und ein zweites Längenelement auf, das mit dem ersten Längenelement längsverschiebbar zusammenwirkt. Im zweiten Längenelement ist eine Spindelmutter drehbar und axial unverschiebbar gehaltert, die mit dem Gewinde des ersten Längenelementes zusammenwirkt. Die Spindelmutter liegt mit einer ihrer beiden Stirnflächen großflächig an einer Reibungsfläche des zweiten Längenelementes an oder ist mit dieser in Anlage bringbar, wenn auf die Längenelemente eine axiale Druckkraft einwirkt. Zwischen der anderen Stirnfläche der Spindelmutter und dem zweiten Längenelement ist dagegen ein reibungsverminderndes Axiallager vorgesehen ist, so dass die Spindelmutter beim Aufbringen einer axialen Zugkraft auf die Längenelemente über das Gewinde in Umdrehung versetzbar und die Längenelemente auseinanderziehbar sind. Die Rotation der Spindelmutter ist dagegen beim Aufbringen einer axialen Druckkraft auf die Längenelemente mittels des Reibungswiderstandes zwischen Spindelmutter und Reibungsfläche blockiert, wodurch ein Zusammenschieben der Längenelemente gesperrt ist.

Das erfindungsgemäße längenverstellbare Zwischenstück gemäß Anspruch 2 wirkt in umgekehrter Richtung und weist ein mit einem Gewinde versehenes erstes Längenelement und ein zweites Längenelement auf, das mit dem ersten Längenelement längsverschiebbar zusammenwirkt. Im zweiten Längenelement ist eine Spindelmutter drehbar und axial unverschiebbar gehaltert, die mit dem Gewinde des ersten Längenelementes zusammenwirkt. Die Spindelmutter liegt mit einer ihrer beiden Stirnflächen großflächig an einer Reibungsfläche des zweiten Längenelementes an oder ist mit dieser in Anlage bringbar, wenn auf die Längenelemente eine axiale Zugkraft einwirkt. Zwischen der anderen Stirnfläche der Spindelmutter und dem zweiten Längenelement ist dagegen ein reibungsverminderndes Axiallager vorgesehen ist, so dass die Spindelmutter beim Aufbringen einer axialen Druckkraft auf die Längenelemente über das Gewinde in Umdrehung versetzbar und die Längenelemente zusammenschiebbar sind. Die Rotation der Spindelmutter ist dagegen beim Aufbringen einer axialen Zugkraft auf die Längenelemente mittels des Reibungswiderstandes zwischen Spindelmutter und Reibungsfläche blockiert, wodurch ein Auseinanderziehen der Längenelemente gesperrt ist.

Das erfindungsgemäße Zwischenstück ist in den verschiedensten Bereichen der Technik einsetzbar, einfach und kostengünstig herstellbar und ermöglicht eine stufenlose Längenein- bzw. -nachstellung. Ein weiterer Vorteil liegt darin, dass das erfindungsgemäße Zwischenstück auf einfache Weise verkapselt und daher auch in sehr schmutzigen Umgebungen eingesetzt werden kann.

Gemäß einer vorteilhaften Ausführungsform ist die Reibungsfläche des zweiten Längenelementes und/oder die dieser Reibungsfläche benachbarte Stirnfläche der Spindelmutter mit einer reibungserhöhenden Oberfläche versehen. Hierdurch kann, wenn das Zwischenstück in einer Richtung beaufschlagt wird, in der keine gegenseitige Verschiebung der Längenelemente stattfinden soll, die Drehung der Spindelmutter auf sehr einfache und wirkungsvolle Weise auch dann blockiert werden, wenn das Gewinde eine etwas größere Steigung aufweist.

Vorteilhafterweise ist das zweite Längenelement zweigeteilt und besteht aus einem vorderen Abschnitt und einem hinteren Abschnitt, die axial fluchtend aneinander befestigbar sind, wobei die Reibungsfläche im hinteren Abschnitt ausgebildet ist, während das Axiallager zwischen der Spindelmutter und dem vorderen Abschnitt angeordnet ist. Alternativ hierzu kann die Reibungsfläche im vorderen Abschnitt ausgebildet sein, während das Axiallager zwischen der Spindelmutter und dem hinteren Abschnitt angeordnet ist. Eine derartige Zweiteilung ermöglicht eine besonders einfache Herstellung sowie Montage bzw. Demontage des Zwischenstückes.

Die Befestigung des hinteren Abschnitts am vorderen Abschnitt erfolgt vorteilhafterweise dadurch, dass an einem der Abschnitte ein Außengewinde und am anderen Abschnitt ein Innengewinde vorgesehen ist, so dass die beiden Abschnitte axial fluchtend miteinander verschraubt werden können.

Alternativ hierzu ist es auch ohne weiteres möglich, die gegenseitige Verbindung der beiden Abschnitte auf andere Weise zu bewerkstelligen, beispielsweise mittels einer Gewindemuffe, in die der vordere und hintere Abschnitt von gegenüberliegenden Seiten her eingeschraubt werden.

Zweckmäßigerweise sind die Spindelmutter und das Axiallager in einem Hohlraum des vorderen oder hinteren Abschnitts angeordnet, der sich vom Ende eines Abschnitts in axialer Richtung in den jeweiligen Abschnitt hinein erstreckt.

Zweckmäßigerweise ist das erste Längenelement in der Form einer Kolbenstange und das zweite Längenelement in der Form eines Zylinders ausgebildet, in dem die Kolbenstange längsverschiebbar geführt ist.

Die Erfindung wird nachfolgend anhand der Zeichnungen beispielhaft näher erläutert. In diesen zeigen:
- Figur 1:: einen Längsschnitt durch eine erste Ausführungsform des erfindungsgemäßen Zwischenstückes, das eine Verlängerung ermöglicht, in Verkürzungsrichtung jedoch blockiert,
- Figur 2:: das Zwischenstück von Figur 1 in einer verlängerten Stellung,
- Figur 3:: einen Längsschnitt durch eine zweite Ausführungsform des erfindungsgemäßen Zwischenstückes, das durch Zusammenschieben verkürzbar ist, in Auszugsrichtung jedoch blockiert, und
- Figur 4:: das Zwischenstück von Figur 3 in einer verkürzten Stellung.

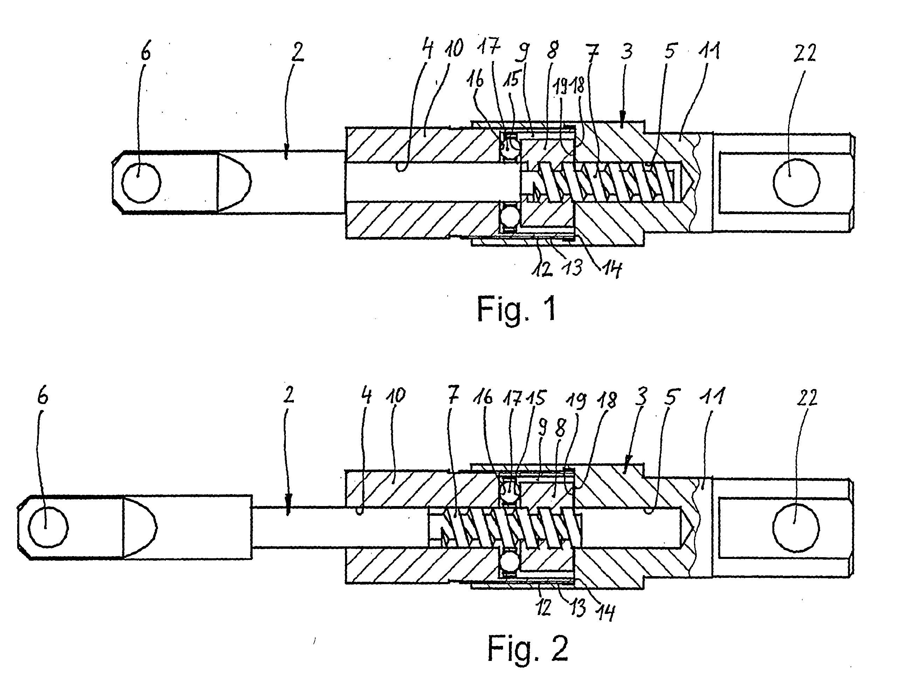

In Figur 1 ist ein längenverstellbares Zwischenstück 1 ersichtlich, das ein erstes Längenelement 2 und ein zweites Längenelement 3 umfasst, die axial fluchtend angeordnet sind. Hierbei ist das erste Längenelement 2 als Stange ausgebildet, die nach Art einer Kolbenstange über einen Teil ihrer Länge in axial fluchtende Zylinderbohrungen 4, 5 des zweiten Längenelementes 3 eingeführt und in diesem längsverschiebbar geführt ist.

Am jeweiligen äußeren Ende können die Längenelemente 2,3, wie dargestellt, Befestigungshilfsmittel, beispielsweise in der Form von Querbohrungen 6,22 oder Zapfen, Gewinde etc., aufweisen. Derartige Befestigungshilfsmittel können verschiedenster Art sein, und hängen davon ab, mit welchen, nicht dargestellten Teilen die äußeren Enden der Längenelemente 2,3 zusammenwirken.

Am gegenüberliegenden, innerhalb des zweiten Längenelements 3 angeordneten Ende weist das erste Längenelement 2 einen Gewindeabschnitt mit einem Gewinde 7 auf. Dieses Gewinde 7 wirkt mit einer Spindelmutter 8 zusammen, die drehbar, jedoch axial unverschiebbar in einem Hohlraum 9 des zweiten Längenelementes 3 angeordnet ist.

Um die Spindelmutter 8 innerhalb des zweiten Längenelements 3 anordnen zu können, ist das zweite Längenelement 3 zweigeteilt und besteht aus einem im Wesentlichen zylinderförmigen, vorderen Abschnitt 10 sowie einem im Wesentlichen zylinderförmigen, hinteren Abschnitt 11. Der Hohlraum 9, der die Spindelmutter 8 aufnimmt, wird durch eine entsprechend groß dimensionierte Axialbohrung am hinteren Ende des vorderen Abschnitts 10 gebildet. Die Zylinderbohrung 4 befindet sich im vorderen Abschnitt 10, während sich die Zylinderbohrung 5, welche zumindest im wesentlichen den gleichen Durchmesser wie die Zylinderbohrung 4 aufweist, im hinteren Abschnitt 11 befindet.

Der hintere Abschnitt 11 ist axial fluchtend auf den vorderen Abschnitt 10 aufgeschraubt. Hierzu weist der hintere Abschnitt 11 in seinem vorderen Endbereich eine entsprechend groß dimensionierte Axialbohrung mit einem Innengewinde 12 auf, in das der hintere Endbereich des vorderen Abschnitts 10, der ein entsprechendes Außengewinde 13 trägt, einschraubbar ist, bis die hintere Stirnfläche 14 des vorderen Abschnitts 10 am Grund der Axialbohrung anschlägt. Alternativ könnte auch der vordere Abschnitt 10 auf den hinteren Abschnitt 11 aufgeschraubt sein.

Wie ersichtlich, befindet sich zwischen der vorderen Stirnfläche 15 der Spindelmutter 8 und der Bodenfläche 16 des Hohl-raums 9 ein Axiallager 17, an dem die Spindelmutter 8 axial abgestützt ist. Das Axiallager 17 ist im vorliegenden Ausführungsbeispiel als Axialkugellager ausgebildet, kann jedoch auch aus anderen Lagerarten bestehen, welche einen niedrigen Roll- bzw. Gleitwiderstand haben. Mit der gegenüberliegenden, hinteren Stirnfläche 18 liegt die Spindelmutter 8 dagegen direkt an einer Reibungsfläche 19 des hinteren Abschnitts 11 des zweiten Längenelementes 3 an, wobei diese Reibungsfläche 19 durch den Boden der Axialbohrung gebildet wird und damit parallel zur hinteren Stirnfläche 18 der Spindelmutter 8 verläuft. Die Spindelmutter 8 kann dadurch großflächig an der Reibungsfläche 19 anliegen, wodurch sich ein großer Reibungswiderstand ergibt, wenn die Spindelmutter 8 durch den Axialschub des Gewindes 7 gegen die Reibungsfläche 19, d.h. in den Figuren 1 und 2 nach rechts, gedrückt wird.

Wird die Spindelmutter 8 dagegen mittels des Gewindes 7 in die entgegengesetzte axiale Richtung, d.h. nach links, gedrückt bzw. gezogen, so ist der Reibungswiderstand zwischen Spindelmutter 8 und vorderem Abschnitt 10 aufgrund des Axiallagers 17 wesentlich niedriger. Die beiden Längenelemente 2, 3 lassen sich somit bereits mit geringer Kraft auseinander ziehen, wobei die Spindelmutter 8 über das Gewinde 7 in Rotation versetzt wird. Form und Steigung des Gewindes 7 sind derart ausgebildet, dass zwischen Gewinde 7 und Spindelmutter 8 keine Selbsthemmung auftritt.

Figur 2 zeigt das längenverstellbare Zwischenstück 1 in einer im Vergleich zu Figur 1 weiter auseinander gezogenen Stellung. Ein Zusammenschieben der beiden Längenelemente 2, 3 aus einer einmal eingenommenen Stellung, beispielsweise aus der in Figur 2 gezeigten Stellung, ist nicht möglich. Wird nämlich auf die beiden Längenelemente 2, 3 von gegenüberliegenden Seiten her eine axiale Druckkraft aufgebracht, so steigt der Reibungswiderstand zwischen der Spindelmutter 8 und dem zweiten Längenelement 3 im Bereich der Reibungsfläche 19 derart stark an, dass eine Rotation der Spindelmutter 8 blockiert wird.

Das in den Figuren 1 und 2 dargestellte Zwischenstück 1 kann damit einerseits bereits mit geringer Kraft stufenlos auseinander gezogen, d. h. verlängert werden, und gewährleistet andererseits in jeder Position eine sofortige Verriegelung in die entgegengesetzte Richtung, d.h. in Verkürzungsrichtung.

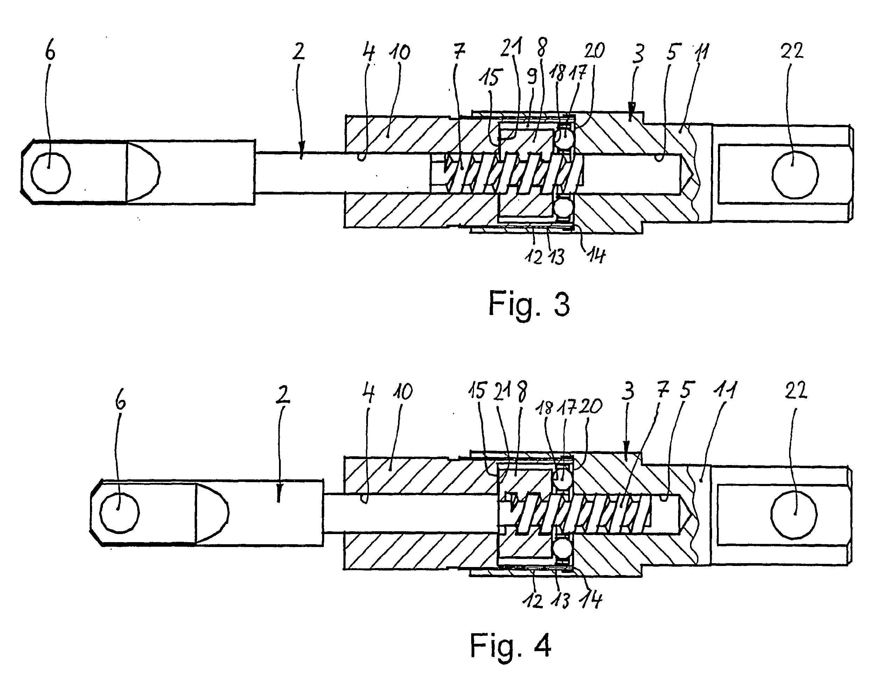

In den Figuren 3 und 4 ist eine zweite Ausführungsform des erfindungsgemäßen Zwischenstücks 1 dargestellt, die ganz ähnlich wie die erste Ausführungsform ausgebildet ist, jedoch in umgekehrter Richtung wirkt. Diese zweite Ausführungsform lässt sich von einer Position mit maximaler Länge, die in Figur 3 dargestellt ist, mit geringer Kraft stufenlos zusammenschieben, während ein Auseinanderziehen der beiden Längenelemente 2, 3 in jeder Position gesperrt wird. In den Figuren 3 und 4 sind Teile, die zur ersten Ausführungsform gleich oder ähnlich sind, mit gleichen Bezugszeichen versehen.

Der einzige Unterschied zwischen der zweiten und der ersten Ausführungsform liegt darin, dass bei der zweiten Ausführungsform, wie aus den Figuren 3 und 4 ersichtlich, die Lage des Axiallagers 17 hinsichtlich der Spindelmutter 8 seitenvertauscht ist, d.h., das Axiallager 17 ist zwischen der Spindelmutter 8 und einer Bodenfläche 20 des zweiten Längenelementes 3 angeordnet, während die Spindelmutter 8 mit ihrer vorderen Stirnfläche 15 direkt an einer hierzu parallelen Reibungsfläche 21 des ersten Längenelementes 2 großflächig anliegt. Die Bodenfläche 20 der zweiten Ausführungsform entspricht dabei der Reibungsfläche 19 der ersten Ausführungsform. Die Reibungsfläche 21 der zweiten Ausführungsform entspricht der Bodenfläche 16 der ersten Ausführungsform.

Wird auf die sich in einer auseinander gezogenen Stellung befindenden Längenelemente 2, 3 der zweiten Ausführungsform eine axiale Druckkraft aufgebracht, d.h. die beiden Längenelemente 2, 3 zusammengeschoben, bewirkt das Gewinde 7 eine Drehung der Spindelmutter 8, was aufgrund des durch das Axiallager 17 verringerten Reibungswiderstandes zwischen Spindelmutter 8 und zweitem Längenelement 3 bereits bei geringen Druckkräften möglich ist. Das erste Längenelement 2 kann daher stufenlos in das zweite Längenelement 3 eingeschoben werden. Umgekehrt bewirkt der hohe Reibungswiderstand zwischen der Spindelmutter 8 und dem zweiten Längenelement 3 im Bereich der Reibungsfläche 21, dass sich die Spindelmutter 8 bei einem Auseinanderziehen der Längenelemente 2, 3 nicht mehr drehen kann und dadurch ein Auseinanderziehen blockiert.

Erfindungsgemäß wird ein längenverstellbares Zwischenstück geschaffen, das auch als selbstverankernde Längeneinstell- und -nachstellvorrichtung bezeichnet werden kann und in den verschiedensten Bereichen der Technik einsetzbar ist. Einsatzbereiche sind beispielsweise: als Nachstellvorrichtung in einer Simplex-Trommelbremse oder Servobremse, als Einstell- bzw. Nachstellvorrichtung für Druck- oder Zugkolben, Handbremshebel, Gestänge, Bowdenzüge und vieles mehr.

## Patentansprüche

1. Längenverstellbares Zwischenstück mit einem unidirektional wirkenden Verschiebesperrmechanismus, **gekennzeichnet durch** folgende Merkmale:
- es ist ein mit einem Gewinde (7) versehenes erstes Längenelement (2) und ein zweites Längenelement (3) vorgesehen, das mit dem ersten Längenelement (2) längsverschiebbar zusammenwirkt,
- im zweiten Längenelement (3) ist eine Spindelmutter (8) drehbar und axial unverschiebbar gehaltert, die mit dem Gewinde (7) des ersten Längenelementes (2) zusammenwirkt,
- die Spindelmutter (8) liegt mit einer (18) ihrer beiden Stirnflächen (15, 18) großflächig an einer Reibungsfläche (19) des zweiten Längenelementes (3) an oder ist mit dieser in Anlage bringbar, wenn auf die Längenelemente (2, 3) ein axiale Druckkraft einwirkt, während zwischen der anderen Stirnfläche (15) der Spindelmutter (8) und dem zweiten Längenelement (3) ein reibungsverminderndes Axiallager (17) vorgesehen ist, so dass die Spindelmutter (8) beim Aufbringen einer axialen Zugkraft auf die Längenelemente (2, 3) über das Gewinde (7) in Umdrehung versetzbar und die Längenelemente auseinanderziehbar sind, während die Rotation der Spindelmutter (8) beim Aufbringen einer axialen Druckkraft auf die Längenelemente (3) mittels des Reibungswiderstandes zwischen Spindelmutter (8) und Reibungsfläche (19) blockiert und **dadurch** ein Zusammenschieben der Längenelemente (2, 3) gesperrt ist.

2. Längenverstellbares Zwischenstück mit einem unidirektional wirkenden Verschiebesperrmechanismus, **gekennzeichnet durch** folgende Merkmale:
- es ist ein mit einem Gewinde (7) versehenes erstes Längenelement (2) und ein zweites Längenelement (3) vorgesehen, das mit dem ersten Längenelement (2) längsverschiebbar zusammenwirkt,
- im zweiten Längenelement (3) ist eine Spindelmutter (8) drehbar und axial unverschiebbar gehaltert, die mit dem Gewinde (7) des ersten Längenelementes (2) zusammenwirkt,
- die Spindelmutter (8) liegt mit einer (15) ihrer beiden Stirnflächen (15, 18) großflächig an einer Reibungsfläche (21) des zweiten Längenelementes (3) an oder ist mit dieser in Anlage bringbar, wenn auf die Längenelemente (2, 3) eine axiale Druckkraft einwirkt, während zwischen der anderen Stirnfläche (18) der Spindelmutter (8) und dem zweiten Längenelement (3) ein reibungsverminderndes Axiallager (17) vorgesehen ist, so dass die Spindelmutter (8) beim Aufbringen einer axialen Druckkraft auf die Längenelemente (2, 3) über das Gewinde (7) in Umdrehung versetzbar und die Längenelemente (2, 3) zusammenschiebbar sind, während die Rotation der Spindelmutter (8) beim Aufbringen einer axialen Zugkraft auf die Längenelemente (3) mittels des Reibungswiderstandes zwischen Spindelmutter (8) und Reibungsfläche (21) blockiert und **dadurch** ein Auseinanderziehen der Längenelemente (2, 3) gesperrt ist.

3. Zwischenstück nach Anspruch 1 oder 2, **dadurch gekennzeichnet, dass** die Reibungsfläche (19, 21) des zweiten Längenelementes (3) und/oder die dieser Reibungsfläche (19, 21) benachbarte Stirnfläche (15, 18) der Spindelmutter (8) mit einer reibungserhöhenden Oberfläche versehen ist.

4. Zwischenstück nach einem der vorhergehenden Ansprüche, **dadurch gekennzeichnet, dass** das zweite Längenelement (3) zweigeteilt ist und aus einem vorderen Abschnitt (10) und einem hinteren Abschnitt- (11) besteht, die axial fluchtend aneinander befestigbar sind, wobei die Reibungsfläche (19) im hinteren Abschnitt (11) ausgebildet ist, während das Axiallager (17) zwischen der Spindelmutter (8) und dem vorderen Abschnitt (10) angeordnet ist.

5. Zwischenstück nach einem der Ansprüche 1 bis 3, **dadurch gekennzeichnet, dass** das zweite Längenelement (3) zweigeteilt ist und aus einem vorderen Abschnitt (10) und aus einem hinteren Abschnitt (11) besteht, die axial fluchtend aneinander befestigbar sind, wobei die Reibungsfläche (21) im vorderen Abschnitt (10) ausgebildet ist, während das Axiallager (17) zwischen der Spindelmutter (8) und dem hinteren Abschnitt (11) angeordnet ist.

6. Zwischenstück nach Anspruch 4 oder 5, **dadurch gekennzeichnet, dass** die Spindelmutter (8) und das Axiallager (17) in einem Hohlraum (9) des vorderen oder hinteren Abschnitts (10, 11) angeordnet sind, der sich vom Ende des Abschnitts (10, 11) in axialer Richtung in den jeweiligen Abschnitt (10, 11) hinein erstreckt.

7. Zwischenstück nach einem der vorhergehenden Ansprüche, **dadurch gekennzeichnet, dass** das erste Längenelement (2) in der Form einer Kolbenstange und das zweite Längenelement (3) in der Form eines Zylinders ausgebildet ist, in dem das erste Längenelement (2) längsverschiebbar geführt ist.

## Claims

1. Longitudinally adjustable intermediate piece with a unidirectionally acting displacement blocking mechanism, **characterised by** the following features:
- a first longitudinal element (2) provided with a screw thread (7), and a second longitudinal element (3) which cooperates in a longitudinally displaceable fashion with the first longitudinal element (2), are provided, a spindle nut (8), which cooperates with screw the thread (7) of the first longitudinal element (2), is held rotatably and axially undisplaceably in the second longitudinal element (3),
the spindle nut (8) rests with a large area of one (18) of its two end surfaces (15, 18) on a friction surface (19) of the second longitudinal element (3) or can be brought to bear on it when an axial compression force acts on the longitudinal elements (2, 3), while a friction-reducing axial bearing (17) is provided between the other end surface (15) of the spindle nut (8) and the second longitudinal element (3) so that the spindle nut (8) can be displaced in rotation via the screw thread (7) when an axial tension force is applied to the longitudinal elements (2, 3) and the longitudinal elements can be pulled apart, whereas the rotation of the spindle nut (8) is blocked by means of the friction resistance between the spindle nut (8) and the friction surface (19) when an axial compression force is applied to the longitudinal elements (3) and the longitudinal elements (2, 3) are thereby prevented from being pressed together.

2. Longitudinally adjustable intermediate piece with a unidirectionally acting displacement blocking mechanism, **characterised by** the following features:
- a first longitudinal element (2) provided with a screw thread (7), and a second longitudinal element (3) which cooperates in a longitudinally displaceable fashion with the first longitudinal element (2), are provided, a spindle nut (8), which cooperates with the screw thread (7) of the first longitudinal element (2), is held rotatably and axially undisplaceably in the second longitudinal element (3),
the spindle nut (8) rests with a large area of one (15) of its two end surfaces (15, 18) on a friction surface (21) of the second longitudinal element (3) or can be brought to bear on it when an axial compression force acts on the longitudinal elements (2, 3), while a friction-reducing axial bearing (17) is provided between the other end surface (18) of the spindle nut (8) and the second longitudinal element (3) so that the spindle nut (8) can be displaced in rotation via the screw thread (7) when an axial compression force is applied to the longitudinal elements (2, 3) and the longitudinal elements (2, 3) can be pressed together, whereas the rotation of the spindle nut (8) is blocked by means of the friction resistance between the spindle nut (8) and the friction surface (21) when an axial tension force is applied to the longitudinal elements (3) and the longitudinal elements (2, 3) are thereby prevented from being pulled apart.

3. Intermediate piece according to Claim 1 or 2, **characterised in that** the friction surface (19, 21) of the second longitudinal element (3), and/or that end surface (15, 18) of the spindle nut (8) which lies next to this friction surface (19, 21), is provided with a friction-increasing surface.

4. Intermediate piece according to any one of the preceding claims, **characterised in that** the second longitudinal element (3) is in two parts and consists of a front section (10) and a rear section (11), which can be fastened axially flush with one another, the friction surface (19) being formed in the rear section (11) while the axial bearing (17) is arranged between the spindle nut (8) and the front section (10).

5. Intermediate piece according to any one of Claims 1 to 3, **characterised in that** the second longitudinal element (3) is in two parts and consists of a front section (10) and of a rear section (11), which can be fastened axially flush with one another, the friction surface (21) being formed in the front section (10) while the axial bearing (17) is arranged between the spindle nut (8) and the rear section (11).

6. Intermediate piece according to Claim 4 or 5, **characterised in that** the spindle nut (8) and the axial bearing (17) are arranged in a cavity (9) of the front or rear section (10, 11), which extends from the end of the section (10, 11) in the axial direction into the respective section (10, 11).

7. Intermediate piece according to any one of the preceding claims, **characterised in that** the first longitudinal element (2) is designed in the form of a piston rod and the second longitudinal element (3) is designed in the form of a cylinder, in which the first longitudinal element (2) is guided in a longitudinally displaceable fashion.

## Revendications

1. Pièce intermédiaire réglable en longueur comprenant un mécanisme de blocage de déplacement à effet unidirectionnel, **caractérisée par** les éléments suivants :
- il est prévu un premier élément allongé (2) pourvu d'un pas de vis (7) et un second élément allongé (3) qui coopère avec le premier élément allongé (2) avec faculté de déplacement longitudinal,
- un écrou à broche (8) est maintenu dans le second élément allongé (3) avec possibilité de rotation mais sans possibilité de déplacement axial, qui coopère avec le pas de vis (7) du premier élément allongé (2),
- l'écrou à broche (8) est appliqué par l'une (18) de ses deux surfaces frontales (15, 18) sur une grande surface contre une surface de friction (19) du second élément allongé (3), ou peut être amené en contact avec celle-ci quand une force de compression axiale agit sur les éléments allongés (2, 3), alors qu'il est prévu entre l'autre surface frontale (15) de l'écrou à broche (9) et le second élément allongé (3) un palier axial (17) à réduction de friction, de sorte que, lorsqu'on applique une force de traction axiale sur les éléments allongés (2, 3), l'écrou à broche (8) est susceptible d'être mis en rotation via le pas de vis (7), et les éléments allongés peuvent être tirés en écartement l'un de l'autre, alors que la rotation de l'écrou à broche (8), lors de l'application d'une force de compression axiale sur les éléments allongés (3) est bloquée au moyen de la résistance de friction entre l'écrou à broche (8) et la surface de friction (19) et que grâce à cela, un déplacement des éléments allongés (2, 3) en rétraction est bloqué.

2. Pièce intermédiaire réglable en longueur comprenant un mécanisme de blocage de déplacement à effet unidirectionnel, **caractérisée par** les éléments suivants :
- il est prévu un premier élément allongé (2) pourvu d'un pas de vis (7) et un second élément allongé (3) qui coopère avec le premier élément allongé (2) avec faculté de déplacement longitudinal,
-- un écrou à broche (8) est maintenu dans le second élément allongé (3) avec possibilité de rotation mais sans possibilité de déplacement axial, qui coopère avec le pas de vis (7) du premier élément allongé (2),
- l'écrou à broche (8) est appliqué par l'une (15) de ses deux surfaces frontales (15, 18) sur une grande surface contre une surface de friction (21) du second élément allongé (3), ou peut être amené en contact avec celle-ci quand une force de compression axiale agit sur les éléments allongés (2, 3), alors qu'il est prévu entre l'autre surface frontale (18) de l'écrou à broche (9) et le second élément allongé (3) un palier axial (17) à réduction de friction, de sorte que, lorsqu'on applique une force de traction axiale sur les éléments allongés (2, 3), l'écrou à broche (8) est susceptible d'être mis en rotation via le pas de vis (7), et les éléments allongés peuvent être déplacés en rétraction, alors que la rotation de l'écrou à broche (8), lors de l'application d'une force de compression axiale sur les éléments allongés (3) est bloquée au moyen de la résistance de friction entre l'écrou à broche (8) et la surface de friction (21) et que grâce à cela, un tirage des éléments allongés (2, 3) en écartement l'un de l'autre est bloqué.

3. Pièce intermédiaire selon la revendication 1 ou 2, **caractérisée en ce que** la surface de friction (19, 21) du second élément allongé (3) et/ou la surface frontale (15, 18), voisine de cette surface de friction (19, 21), de l'écrou à broche (8) est pourvue d'une surface augmentant la friction.

4. Pièce intermédiaire selon l'une des revendications précédentes, **caractérisée en ce que** le second élément allongé (3) est en deux parties et constitué d'un tronçon antérieur (10) et d'un tronçon postérieur (11), lesquels peuvent être fixés en alignement axial l'un à l'autre, la surface de friction (19) étant réalisée dans le tronçon postérieur (11), alors que le palier axial (19) est agencé entre l'écrou à broche (8) et le tronçon antérieur (10).

5. Pièce intermédiaire selon l'une des revendications 1 à 3, **caractérisée en ce que** le second élément allongé (3) est en deux parties est constitué d'un tronçon antérieur (10) et d'un tronçon postérieur (11), lesquels peuvent être fixés en alignement axial l'un à l'autre, la surface de friction (21) étant réalisée dans le tronçon antérieur (10), alors que le palier axial (17) est agencé entre l'écrou à broche (8) et le tronçon postérieur (11).

6. Pièce intermédiaire selon la revendication 4 ou 5, **caractérisée en ce que** l'écrou à broche (8) et le palier axial (17) sont agencés dans une cavité (9) du tronçon antérieur ou postérieur (10, 11) qui s'étend depuis l'extrémité du tronçon (10, 11) en direction axiale jusque dans le tronçon respectif (10, 11).

7. Pièce intermédiaire selon l'une des revendications précédentes, **caractérisée en ce que** le premier élément allongé (2) est réalisé sous la forme d'une tige de piston et le second élément allongé (3) est réalisé sous la forme d'un cylindre dans lequel le premier élément allongé (2) est guidé avec possibilité de déplacement longitudinal.
